# EUROPEAN PATENT SPECIFICATION

(11) **EP 2 931 401 B1**
(45) Date of publication and mention of the grant of the patent: **11.09.2019**
(21) Application number: 13805492.9
(22) Date of filing: 09.12.2013
(51) Int. Cl.: B01D 17/04, C02F 101/32, C02F 1/24, B01D 17/02, B03D 1/14, B03D 1/24

(54) **FLOTATION APPARATUS**
FLOTATIONSVORRICHTUNG
APPAREIL DE FLOTTATION

(30) Priority: 13.12.2012 GB 201222483
(43) Date of publication of application: 21.10.2015
(73) Proprietor: Enhydra Ltd, Gloucestershire GL12 8AA (GB)
(72) Inventor: LLOYD, David Douglas, Wotton-Under-Edge Gloucestershire GL12 8AA (GB)
(74) Representative: Swindell & Pearson Limited
(86) International application number: PCT/GB2013/053235
(87) International publication number: WO 2014/091213

(56) References cited:
- WO-A1-2008/123973
- US-A- 4 208 270
- US-A- 5 080 802
- US-B1- 6 468 330

## Description

This invention concerns flotation apparatus, and particularly but not exclusively flotation apparatus for separating oil from water.

It is well established to separate oil and water mixtures in oil field production installations, so that the water can subsequently be safely discharged. Such mixtures include dispersed or emulsified oil typically from crude oil production separators. The mixture may also include some solid material. One method commonly used for such separation is flotation, which may be carried out in compact flotation units (CFU's). Such a separation method may be used in conjunction with other separation techniques.

Document WO2008/123973 discloses a separation vessel having an upper part providing a weir to permit material to pass thereover, the separator having an outlet for water below the weirs for water having passed thereover, the separator having an outlet for oil and/or gas at an upper part thereof.

Document US6468330 relates to separation of particles in a gas, in particular microbes in a gas (col. 2, II. 51-57).

Document US4208270 discloses a separation apparatus with several hydrocyclones working in parallel in one chamber (11a, 11b). Such apparatus generally includes a vessel into which the mixture is fed, usually with a gas stream whereby the gas bubbles facilitate flotation of the lighter oil particles to an upper part of the vessel, with the heavier water fraction sinking to a lower part of the vessel. The mixture may be tangentially fed into the vessel to cause swirling of the mixture.

A problem encountered with such methods is that pilot plants can often work very well, but difficulties can be encountered once such plants have been scaled up, where the results received may be very different to those obtained by the pilot plant.

In bubble flotation, generally as small a bubble size as possible is desired, and typical bubble sizes in a CFU are 30 to 50 microns which generally work well. To work well in a CFU it is important for the bubbles which can carry the oil droplets, to be accelerated to the centre of the vessel to coalesce with other bubbles and rise to the surface to be separated. The factors which govern how well this operates are the g-force applied by the tangential feed, and also the distance to the centre of the vessel.

As an example in a pilot scale CFU, typical operating conditions could be-

| | |
|---|---|
| Inlet velocity | 4 m/s |
| Diameter | 0.3 m |
| Liquid height | 1 m |
| Residence time | 30 seconds |

These parameters generate a g-force of approximately 10.9g. This arrangement provides a maximum distance for bubbles to travel to the centre of 0.15m. The minimum bubble size that will migrate to the centre and allow this system to operate is 80 microns.

In contrast the conditions in a similar full scale plant would be-

| | |
|---|---|
| Inlet velocity | 4 m/s |
| Diameter | 1.2 m |
| Liquid height | 2.5 m |
| Residence time | 30-60 seconds |
| Throughput | 170-340 m**³**/hr |

With such an arrangement the g-force drops to 2.7 and the maximum separation distance is 0.6m. The minimum bubble size that will migrate to the centre and allow this system to operate is 340 microns. The operating efficiency will therefore be markedly inferior due to the larger bubble size requirement and correspondingly large droplet size captured by said bubble size. This therefore illustrates why full scale plants can be found to be significantly less effective than pilot plants.

According to the present invention there is provided separation apparatus for separating a mixture of oil and water, the apparatus comprising a separation chamber, an inlet into the chamber for a mixture to be separated, a plurality of separation vessels located in the chamber, each separation vessel having an upper part providing a weir to permit material to pass thereover, a connection from the chamber inlet to inlets in a lower part of each separation vessel to enable mixture to be urged into each vessel, the chamber having an outlet for water below the weirs for water having passed thereover, the chamber having an outlet for oil and/or gas at an upper part thereof.

The chamber may include a collection point for separated oil, and an outlet from the collection point.

The vessel inlets may be configured to cause mixture entering the vessels to swirl, and the inlets may provide a tangential flow into the vessels.

A swirl device may be provided at or adjacent the vessel inlets to cause a mixture entering the vessel to swirl, and the swirl device may include a set of curved vanes.

The apparatus may include a gas injection arrangement for injecting gas into the mixture, the gas injection arrangement may be configured to inject gas upstream of the chamber inlet, or directly into the chamber.

The apparatus may include a mixing arrangement for mixing the gas and the mixture upstream of the chamber inlet, and the mixing arrangement may comprise a restriction or shearing device.

The outlet for oil and/or gas may be provided in an upper wall of the chamber.

The vessels may be substantially cylindrical.

The chamber may be substantially cylindrical.

The vessels may be arranged around the perimeter of the chamber.

In one embodiment six vessels are provided around the perimeter of the chamber.

The chamber inlet may be substantially central, and may extend upwardly into the chamber.

The chamber inlet may lead to a distributor which connects with inlets into the vessels to feed mixture thereinto.

The separated oil collection point may be located centrally within the chamber, and may be located above the chamber inlet.

The chamber may be a pressure vessel.

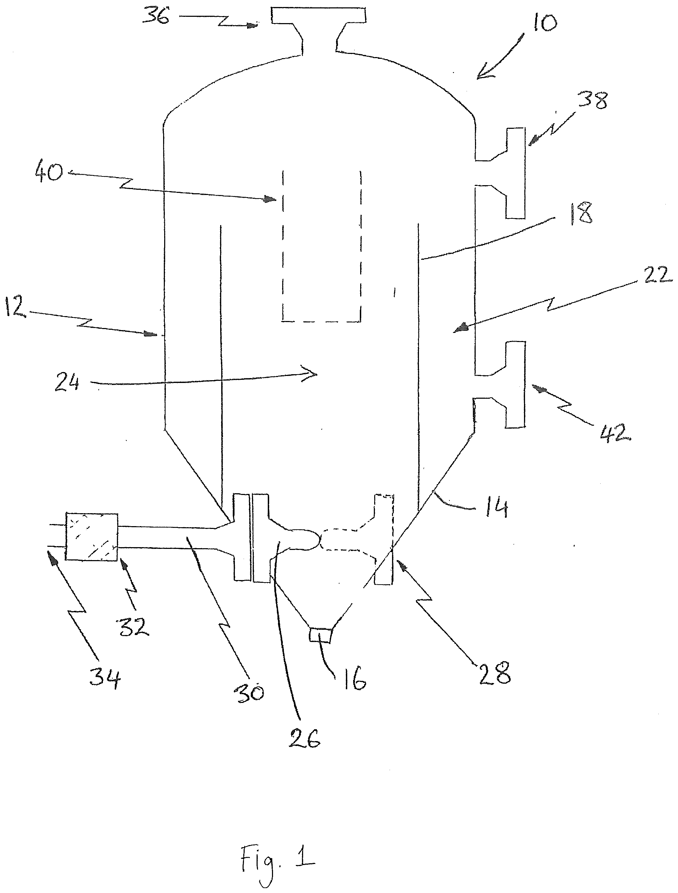

An embodiment of the present invention will now be described by way of example only with reference to the accompanying drawings, in which:-
Fig. 1 is a diagrammatic cross sectional elevation of a single compact floatation unit for illustrative purposes only;
Fig. 2 is a diagrammatic cross sectional elevation of a flotation apparatus according to the invention;
Fig. 3 is a diagrammatic cross sectional plan view of the apparatus of fig. 2.

For illustrative purposes only a single compact flotation unit apparatus 10 as could be used for separating an oil and water mixture in oil field production is shown. The apparatus 10 comprises a generally cylindrical vessel 12 with a conical lower part 14 leading to an outlet 16.

A cylindrical divider 18 is provided which extends from part way up the conical lower part 14 and divides the vessel into an annular outer zone 22 and a central zone 24, which central zone 24 extends to the lower part of the vessel 12.

A tangential inlet 26 extends into the conical lower part 14 a short distance above the bottom of the vessel. A second diametrically opposite tangential inlet 28 as shown in dotted lines may also be provided. The tangential arrangement of the inlets 26, 28 is intended to introduce a swirl into liquid entering the vessel 12. In place or in addition to the tangential arrangement of the inlet or inlets 26, 28, a swirl device (not shown) may be provided which may comprise a set of curved vanes.

An inlet pipe 30 extends from the inlet 26 to a mixing device 32. An inlet 34 to the mixing device is connected to a supply of oil/water mixture and also a gas supply to cause flotation. The mixing device 32 inputs energy to the gas and oil/water mixture, and ensures a homogeneous mixing thereof.

An outlet 36 is provided at the upper end of the vessel 12 for oil and/or gas. A further outlet 38 may be provided on a side of the vessel above the top of the divider 18. The further outlet 38 may be connected to an oil removal compartment 40, shown in dotted lines in the drawing. A water outlet 42 is provided in the side of the vessel 12 a small distance above the bottom of the annular outer zone 22.

In use, an oil and water mixture and gas are fed through the inlet 34 to be mixed in the mixing device 32. This liquid and gas mixture then passes through the inlet pipe 30 and is injected through at least the inlet 26 into the vessel 12 so as to swirl therein. The mixture will rise within the central zone 24 to weir over the top of the cylindrical divider 18.

The flotation gas will tend to carry the oil and any hydrocarbon gas upwardly, whilst water will weir over the divider and drop down in the annular outer zone 22. In the outer zone 22 any remaining gas should pass upwards, whilst cleaned water will pass to the water outlet 42 and can be taken out of the apparatus.

Any solids in the mixture will tend to drop to the bottom of the vessel 12, where due to the conical shape they will concentrate, and can readily be removed through the outlet 16.

The area above the divider 18 in the central zone serves as a settling volume with little upward or downward direction of flow, in which the light phase liquid droplets and gas bubbles can migrate upwardly for removal. This removal may be through the outlet 36. Removal could though be through the further outlet 38. Where hydrocarbon gas and oil are to be separated, the gas may be taken out through the outlet 36, whilst oil may weir over or be skimmed into the oil removal compartment 40 and be taken out through the further outlet 38.

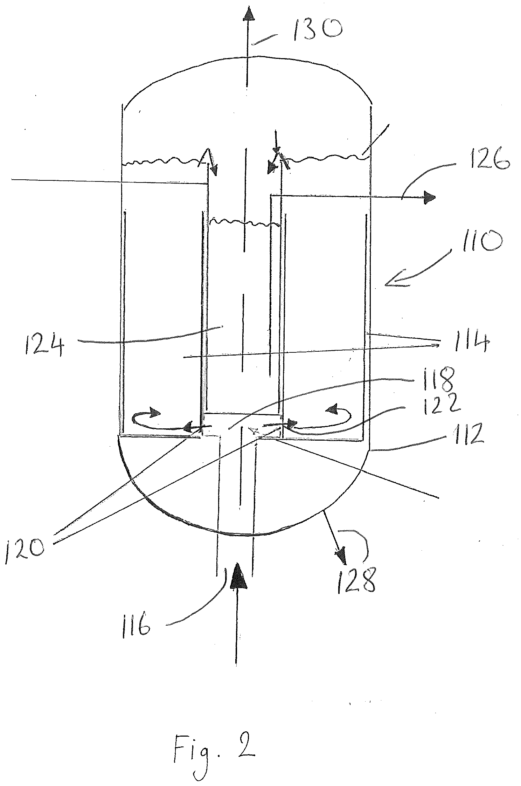

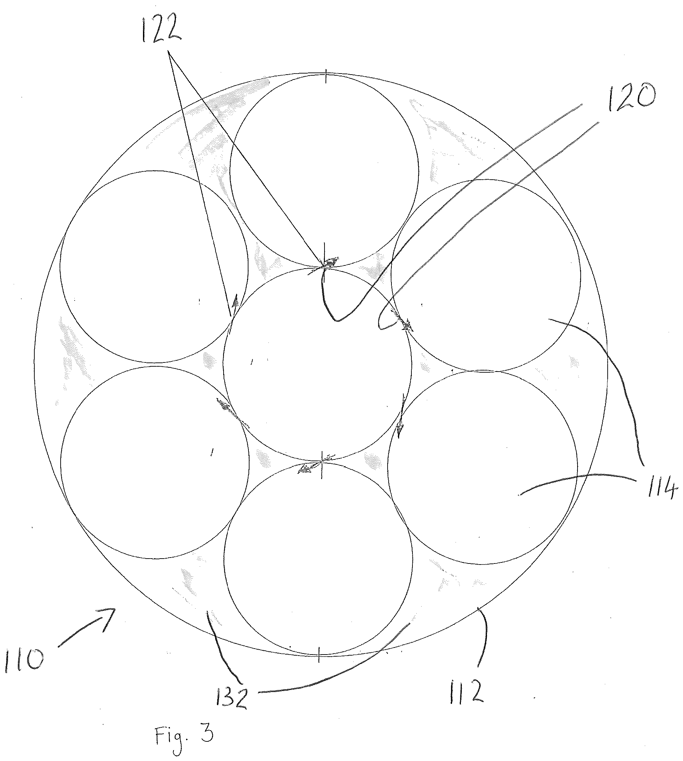

Figs. 2 and 3 show a flotation apparatus 110 for separating an oil and water mixture, as typically could be produced in oil field production. The apparatus 110 will operate under similar principles as the apparatus 10 described above.

The apparatus 110 includes a separation chamber 112 in the form of a cylindrical pressure vessel. Located within the chamber 112 and around the perimeter thereof are six separation vessels 114 in the form of vertically aligned tubes.

An inlet 116 is provided centrally at the lower part of the chamber 112. The inlet 116 is connected to a supply of oil/water mixture and the gas supplied to cause flotation. A mixing device will be provided in the supply similar to the device 32 to input energy and ensure a homogeneous mixing thereof.

The inlet 116 extends upwardly within the chamber 112 to a distributor chamber 118 which has fixed radial outlets 120 which each connect to a respective tangential inlet 122 in a respective vessel 114.

Located above the distributor chamber 118 an oil collection chamber 124 is provided. This is an open topped chamber which extends above the top of the open topped vessels 114. An outlet 126 is provided from the chamber 124 for collected oil. A water outlet 128 is provided at a lower part of the chamber 112. A gas outlet 130 is provided at the top of the chamber 112.

In use a liquid mixture with entrained fine gas bubbles enters through the inlet 116 into the distributor chamber 118. The mixture passes radially outwardly through the outlets 120 to enter the vessels 114 tangentially through the inlets 122.

The tangential entry into the vessels 114 will cause a swirl in the mixture. The bubbles will tend to attract the oil and migrate up to the centre of the vessels 114 and coalesce. The mixture will rise, and the heavier water will weir over the tops of the vessels 114 passing through the spaces 132 between the vessels 114 to pass out through the water outlet 128.

The oil carried by the bubbles will keep rising and tend to weir over into the oil collection chamber 124, and a skimming device may be provided for removing the oil from this chamber. The oil can then pass out through the oil outlet 126. Any collected gas can pass out through the outlet 130.

There is thus described a separation apparatus which provides for the advantages of a CFU arrangement. Using the separate relatively small separation vessels means that the separation distance from the outside to the centres of the separation vessels remains relatively small, and also the relatively high g-forces in the vessels can be maintained. Accordingly, any performance expected from a pilot plant can be maintained in a full scale plant, with the results multiplied by the number of vessels which correspond to the pilot plant.

It is to be realised that various modifications may be made without departing from the scope of the invention. For instance a different number of separation vessels may be provided, and the separation vessels could be configured differently. Different arrangements could be provided for removing components from the chamber. Swirl devices may be provided at or adjacent the vessels to cause swirling of the mixture entering the vessels.

Rather than injecting gas into the mixture upstream of the chamber inlet, the gas could be injected directly into the chamber itself. A further outlet for oil removal may be located elsewhere on the vessel.

## Claims

1. Separation apparatus (110) for separating a mixture of oil and water, the apparatus comprising a separation chamber (112), an inlet (116) into the chamber (112) for a mixture to be separated, a plurality of separation vessels (114) located in the chamber (112), each separation vessel (114) having an upper part providing a weir to permit material to pass thereover, a connection from the chamber inlet (116) to inlets (122) in a lower part of each separation vessel (114) to enable the mixture to be urged into each vessel (114), the chamber (112) having an outlet (128) for water below the weirs for water having passed thereover, the chamber (112) having an outlet (130) for oil and/or gas at an upper part thereof.

2. Apparatus according to claim 1, in which the chamber (112) includes a collection point (124) for separated oil, and an outlet (126) from the collection point (124).

3. Apparatus according to claims 1 or 2, in which the vessel (114) inlets (122) are configured to cause mixture entering the vessels (114) to swirl, a swirl device may be provided at or adjacent the vessel inlets (122) to cause a mixture entering the vessel (114) to swirl, and the swirl device may include a set of curved vanes.

4. Apparatus according to claim 3, in which the vessel inlets (122) are configured to provide a tangential flow into the vessels (114).

5. Apparatus according to any of the preceding claims, in which the apparatus includes a gas injection arrangement for injecting gas into the mixture.

6. Apparatus according to claim 5, in which the gas injection arrangement is configured to inject gas upstream of the chamber inlet (116).

7. Apparatus according to claim 5, in which the gas injection arrangement is configured to inject gas directly into the chamber (112).

8. Apparatus according to any of claims 5 to 7, in which the apparatus includes a mixing arrangement for mixing the gas and the mixture upstream of the chamber inlet (116), and the mixing arrangement may comprise a restriction or shearing device.

9. Apparatus according to any of the preceding claims, in which the outlet (130) for oil and/or gas is provided in an upper wall of the chamber (112).

10. Apparatus according to any of the preceding claims, in which the vessels (114) are cylindrical.

11. Apparatus according to any of the preceding claims, in which the chamber (112) is cylindrical, and the vessels (114) may be arranged around the perimeter of the chamber (112).

12. Apparatus according to claim 11, in which six vessels (114) are provided around the perimeter of the chamber.

13. Apparatus according to any of the preceding claims, in which the chamber inlet (116) is central, may extend upwardly into the chamber (112), and may lead to a distributor (118) which connects with inlets (122) into the vessels (114) to feed mixture thereinto.

14. Apparatus according to any of the preceding claims, in which the separated oil collection point (124) is located centrally within the chamber, (112) and may be above the chamber inlet (116).

15. Apparatus according to any of the preceding claims, in which the chamber (112) is a pressure vessel.

## Patentansprüche

1. Trennvorrichtung (110) zum Trennen eines Öl-Wasser-Gemischs, wobei die Trennvorrichtung eine Trennkammer (112), einen Trennkammerzulauf (116) für das zu trennende Gemisch in die Trennkammer (112), eine Vielzahl an in der Trennkammer (112) angeordneten Trennbehältern (114), wobei jeder Trennbehälter (114) einen oberen Abschnitt aufweist, an dem ein Wehr angeordnet ist, das ein Überströmen des Materials erlaubt, und eine Verbindung vom Trennkammerzulauf (116) zu Trennbehälterzuläufen (122) in einem unteren Abschnitt jedes Trennbehälters (114), um ein Strömen des Gemischs in jeden Trennbehälter (114) zu ermöglichen, umfasst, wobei die Trennkammer (112) einen Ablauf (128) für Wasser unterhalb der Wehre für das Überströmen von Wasser aufweist und wobei die Trennkammer (112) einen Trennkammerablauf (130) für Öl und/oder Gas an deren oberen Abschnitt aufweist.

2. Trennvorrichtung nach Anspruch 1, **dadurch gekennzeichnet, dass** die Trennkammer (112) eine Sammelstelle (124) für abgetrenntes Öl und einen Ablauf (126) von der Sammelstelle (124) umfasst.

3. Trennvorrichtung nach Anspruch 1 oder 2, **dadurch gekennzeichnet, dass** die Trennbehälterzuläufe (122) der Trennbehälter (114) konfiguriert sind, um dem in die Trennbehälter (114) einströmenden Gemisch einen Drall zu versetzen, wobei eine Dralleinrichtung an oder gegenüber den Trennbehälterzuläufen (122) bereitstellbar ist, um einem in den Trennbehälter (114) einströmenden Gemisch einen Drall zu versetzen, und wobei die Dralleinrichtung eine Reihe von gekrümmten Leitblechen umfassen kann.

4. Trennvorrichtung nach Anspruch 3, **dadurch gekennzeichnet, dass** die Trennbehälterzuläufe (122) konfiguriert sind, um eine tangentiale Strömung in die Trennbehälter (114) bereitzustellen.

5. Trennvorrichtung nach einem der vorhergehenden Ansprüche, **dadurch gekennzeichnet, dass** die Trennvorrichtung eine Gaseinspeiseanordnung zum Einspeisen von Gas in das Gemisch umfasst.

6. Trennvorrichtung nach Anspruch 5, **dadurch gekennzeichnet, dass** die Gaseinspeiseanordnung konfiguriert ist, um Gas stromauf des Trennkammerzulaufs (116) einzuspeisen.

7. Trennvorrichtung nach Anspruch 5, **dadurch gekennzeichnet, dass** die Gaseinspeiseanordnung konfiguriert ist, um Gas direkt in die Trennkammer (112) einzuspeisen.

8. Trennvorrichtung nach einem der Ansprüche 5 bis 7, **dadurch gekennzeichnet, dass** die Trennvorrichtung eine Mischeinrichtung zum Mischen des Gases und des Gemischs stromauf des Trennkammerzulaufs (116) umfasst und die Mischeinrichtung eine Begrenzungs- oder Schervorrichtung aufweisen kann.

9. Trennvorrichtung nach einem der vorhergehenden Ansprüche, **dadurch gekennzeichnet, dass** der Trennkammerablauf (130) für Öl und/oder Gas in einer oberen Wand der Trennkammer (112) angeordnet ist.

10. Trennvorrichtung nach einem der vorhergehenden Ansprüche, **dadurch gekennzeichnet, dass** die Trennbehälter (114) zylinderförmig ausgebildet sind.

11. Trennvorrichtung nach einem der vorhergehenden Ansprüche, **dadurch gekennzeichnet, dass** die Trennkammer (112) zylinderförmig ausgebildet ist und die Trennbehälter (114) um den Umfang anordenbar sind.

12. Trennvorrichtung nach Anspruch 11, **dadurch gekennzeichnet, dass** sechs Trennbehälter (114) um den Umfang der Trennkammer angeordnet sind.

13. Trennvorrichtung nach einem der vorhergehenden Ansprüche, **dadurch gekennzeichnet, dass** der Trennkammerzulauf (116) zentral angeordnet ist, sich aufwärts gerichtet in die Trennkammer (112) erstrecken kann und zu einem Verteiler (118) führen kann, der mit den Trennbehälterzuläufen (122) in die Trennbehälter (114) verbunden ist, um das Gemisch in diese einzuspeisen.

14. Trennvorrichtung nach einem der vorhergehenden Ansprüche, **dadurch gekennzeichnet, dass** die Sammelstelle (124) für abgetrenntes Öl zentral in der Trennkammer (112) angeordnet ist und oberhalb des Trennkammerzulaufs (116) angeordnet sein kann.

15. Trennvorrichtung nach einem der vorhergehenden Ansprüche, **dadurch gekennzeichnet, dass** die Trennkammer (112) als Druckbehälter ausgebildet ist.

## Revendications

1. Appareil de séparation (110) pour séparer un mélange de pétrole et d'eau, l'appareil comprenant une chambre de séparation (112), une entrée (116) dans la chambre (112) pour un mélange à séparer, une pluralité de cuves de séparation (114) situées dans la chambre (112), chaque cuve de séparation (114) ayant une partie supérieure fournissant un déversoir pour permettre le passage de la matière par le dessus, une connexion de l'entrée (116) de la chambre aux entrées (122) dans une partie inférieure de chaque cuve de séparation (114) pour permettre au mélange d'être poussé dans chaque cuve (114), la chambre (112) ayant un orifice de sortie (128) pour l'eau au-dessous des déversoirs pour l'eau qui est passée par le dessus, la chambre (112) ayant un orifice de sortie (130) pour du pétrole et / ou du gaz au niveau d'une partie supérieure de celle-ci.

2. Appareil selon la revendication 1, dans lequel la chambre (112) comprend un point de collecte (124) pour le pétrole séparé, et un orifice de sortie (126) du point de collecte (124).

3. Appareil selon les revendications 1 ou 2, dans lequel les entrées (122) de la cuve (114) sont configurées pour faire tourner le mélange entrant dans les cuves (114), un dispositif de tourbillonnement peut être prévu au niveau ou à proximité des entrées (122) de la cuve pour faire tourner un mélange entrant dans la cuve (114), et le dispositif de tourbillonnement peut comprendre un ensemble d'aubes incurvées.

4. Appareil selon la revendication 3, dans lequel les entrées (122) de la cuve sont configurées pour fournir un écoulement tangentiel dans les cuves (114).

5. Appareil selon l'une quelconque des revendications précédentes, dans lequel l'appareil comprend un agencement d'injection de gaz pour injecter du gaz dans le mélange.

6. Appareil selon la revendication 5, dans lequel le dispositif d'injection de gaz est configuré pour injecter du gaz en amont de l'entrée (116) de la chambre.

7. Appareil selon la revendication 5, dans lequel le dispositif d'injection de gaz est configuré pour injecter du gaz directement dans la chambre (112).

8. Appareil selon l'une quelconque des revendications 5 à 7, dans lequel l'appareil comprend un agencement de mélange pour mélanger le gaz et le mélange en amont de l'entrée (116) de la chambre, et l'agencement de mélange peut comprendre un dispositif de restriction ou de cisaillement.

9. Dispositif selon l'une quelconque des revendications précédentes, dans lequel l'orifice de sortie (130) pour le pétrole et / ou le gaz est prévue dans une paroi supérieure de la chambre (112).

10. Dispositif selon l'une quelconque des revendications précédentes, dans lequel les cuves (114) sont cylindriques.

11. Dispositif selon l'une quelconque des revendications précédentes, dans lequel la chambre (112) est cylindrique, et les cuves (114) peuvent être disposées autour du périmètre de la chambre (112).

12. Dispositif selon la revendication 11, dans lequel six cuves (114) sont prévus autour du périmètre de la chambre.

13. Dispositif selon l'une quelconque des revendications précédentes, dans lequel l'entrée (116) de la chambre est centrale, peut s'étendre vers le haut dans la chambre (112), et peut conduire à un distributeur (118) qui se connecte avec des entrées (122) dans les cuves (114) pour y introduire le mélange.

14. Dispositif selon l'une quelconque des revendications précédentes, dans lequel le point de collecte (124) de pétrole séparé est situé au centre de la chambre (112) et peut être situé au-dessus de l'entrée (116) de la chambre.

15. Appareil selon l'une quelconque des précédentes dans lequel la chambre (112) est une cuve sous pression.
